# EUROPEAN PATENT SPECIFICATION

(11) **EP 3 335 570 B1**
(45) Date of publication and mention of the grant of the patent: **01.04.2020**
(21) Application number: 16835536.0
(22) Date of filing: 25.07.2016
(51) Int. Cl.: A23G 1/30, A23G 1/32, A23G 1/40, A23G 1/46

(54) **CHOCOLATE MASS WITH A LOW CALORIFIC VALUE**
KALORIENARME SCHOKOLADENMASSE
MASSE DE CHOCOLAT AYANT UNE VALEUR ÉNERGÉTIQUE RÉDUITE

(30) Priority: 13.08.2015 RU 2015133958
(43) Date of publication of application: 20.06.2018
(73) Proprietor: Limited Liability Company Lighthouse Ocean, St.Petersburg 197022 (RU)
(72) Inventor: GORBUNOV, Artem Olegovich, Ozersk Chelyabinskaya obl. 456785 (RU); GUS'KOVA, Elena Viktorovna, St.Petersburg 198328 (RU); SMOLKO, Natal'ya Sergeevna, Novokuznetsk Kemerovskaya obl. 654032 (RU)
(74) Representative: Glawe, Delfs, Moll
(86) International application number: PCT/RU2016/050023
(87) International publication number: WO 2017/026926

(56) References cited:
- EP-A1- 0 674 840
- EP-A1- 0 788 744
- WO-A1-93/02566
- WO-A1-2009/001063
- US-A- 177 801
- US-A- 6 165 540

## Description

### FIELD OF THE INVENTION

The invention relates to the food industry, in particular to a chocolate mass and may be used for producing dark and milk chocolate having a reduced energy value with the use of an aqueous emulsion.

### PRIOR ART

Traditionally, chocolate products based on cocoa butter and sugar have an energy value ranging from 530 to 580 kcal per 100 g of a product. Such products are not suitable for persons suffering from diabetes mellitus and those on clinical nutrition with a limited number of calories consumed.

A variety of efforts for replacing sugar with less energetic sweeteners and a portion of cocoa butter with a water-in-oil emulsion have been made in order to reduce the energy value of chocolate products.

A chocolate mass with a reduced energy value is known in the art, which comprises 60-80 wt.% chocolate composition and 20-40 wt.% water emulsion based on cocoa butter. Said water emulsion contains 20-40 wt.% cocoa butter, 30-35 wt.% water 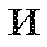 0.05-1 wt.% emulsifier (lecithin etc.). Said chocolate composition comprises a cocoa, a sweetener and, optionally, dietary fibers (see: US 5409719, 25.04.1995). The cocoa content of said mass is 7-30 wt.%, the sweetener content is 15-40 wt.%. However, this composition is used for producing a filling for chocolate products and cannot be used for producing a chocolate, since the resulting product will not harden to form a bar.

A chocolate mass with a reduced energy value is known in the art (see: US 5425957 corresponding to EP 0 674 840 A1), which comprises 60-80 wt.% chocolate composition and 20-40 wt.% water-in-oil emulsion. The emulsion contains from 2 to 16 wt.% water, cocoa butter, and an emulsifier. The chocolate composition comprises a cocoa liquor, a milk powder, maltitol, a hazelnut paste, vanillin, lecithin, aspartame, milk protein and polydextrose. A disadvantage of this chocolate mass is its high energy value as well as off-flavors.

The closest analog of the claimed invention is a chocolate mass for producing dark or milk chocolate (see: US 6165540, 26.12.2000), which comprises 50-95 wt.% chocolate composition and 5-50 wt.% aqueous emulsion based on cocoa butter. The emulsion comprises water in an amount ranging from 10 to 80 wt.%, an emulsifier in an amount ranging from 0.5 to 3 wt.% and cocoa butter. Maltitol, as a sweetener, may be used in a chocolate composition for producing a product of reduced energy value. The energy value of a milk chocolate based on maltitol is 384 kcal/100 g. A disadvantage of such a composition is that the produced chocolate melts too quickly, i.e., does not have a satisfactory texture typical of a chocolate of a standard energy value. Moreover, said maltitol-based chocolate does not have a sufficient sweetness level.

One common disadvantage of the known analogs with low energy value is that their organoleptic and physical properties are far from those of chocolate having standard energy value and based on sugar and cocoa butter.

### SUMMARY OF THE INVENTION

The objective of this invention is to eliminate disadvantages of the analogs and develop a chocolate mass composition for the purpose of producing chocolate with a reduced energy value (330 kcal per 100 g or less) that has physical and organoleptic properties closest to those of chocolate of a standard energy value.

The technical effect of the claimed invention (as compared to analogs with a reduced energy value) is improvement in organoleptic parameters, such as intensity of chocolate flavor, absence of off-flavors and aftertaste, natural sweetness and chocolate texture, with a reduction of energy value thereof. Moreover, physical properties, such as yield stress, contraction degree upon crystallization and hardness of a final product are improved.

This technical effect is achieved by the first embodiment of the invention (b1) due to the fact that a chocolate mass for producing chocolate with a reduced energy value comprises:
80-95 wt.% chocolate composition and
5-20 wt.% aqueous emulsion based on cocoa butter,
said chocolate composition comprising:
40-48 wt.% cocoa liquor,
30-50 wt.% erythritol,
5-30 wt.% dietary fibers,
and said aqueous emulsion based on cocoa butter comprising:
20-80 wt.% cocoa butter,
18-78 wt.% aqueous phase,
1-3 wt.% emulsifier,
and said aqueous phase comprising:
50-90 wt.% water,
10-50 wt.% water-soluble substance.

Moreover, this technical effect is achieved by particular variants of the first embodiment (b1) due to the fact that:
- a chocolate composition is produced from crumb based on erythritol and cocoa liquor, which comprises:
   74-83 wt.% erythritol,
   16-25 wt.% cocoa liquor, and
   not more than 1.5 wt.% water;
- the chocolate mass contains a dry cocoa-product residue in an amount of 40-44 wt.%, a dry total-fat residue in an amount of 22-27 wt.%, and moisture in an amount of 1-11 wt.%;
- at least one ingredient selected from the group, which comprises polyols, carbohydrates and soluble dietary fibers is used as the water-soluble substance;
- glycerol or sorbitol is used as the polyol; sucrose or dextrose is used as the carbohydrate; and pectin or cellulose is used as the soluble dietary fibers;
- at least one ingredient selected from the group, which comprises oligofructose, polydextrose, pectin, maltodextrin, inulin, agar, alginate, carrageenan, cellulose, guar gum, xanthan gum and locust bean gum, is used as the dietary fibers;
- at least one ingredient selected from the group, which comprises lecithin, polyglycerol ester, mono- or diglyceride, sucrose ester, sorbitan ester, is used as the emulsifier.
- a chocolate mass has a energy value not more than 330 kcal/100 g.

This technical effect is achieved by the second embodiment of the invention (b2) due to the fact that a chocolate mass intended for producing a chocolate with a low energy value comprises:
80-95 wt.% chocolate composition and
5-20 wt.% aqueous emulsion based on cocoa butter ,
said chocolate composition comprising:
10-15 wt.% cocoa liquor,
30-50 wt.% erythritol,
5-30 wt.% dietary fibers,
12-14 wt.% cocoa butter,
18-24 wt.% dried milk products;
said aqueous emulsion based on cocoa butter comprising:
20-80 wt.% cocoa butter,
18-78 wt.% aqueous phase,
1-3 wt.% emulsifier;
and said aqueous phase comprising:
50-90 wt.% water,
10-50 wt.% water-soluble substance.

Furthermore, this technical effect is achieved by particular variants of the second embodiment (b2) due to the fact that:
- a chocolate composition is produced from crumb based on erythritol and cocoa liquor, which comprises:
   74-83 wt.% erythritol,
   16-25 wt.% cocoa liquor, and
   not more than 1.5 wt.% water;
- a chocolate mass comprises a dry cocoa-product residue in an amount of 22-27 wt.%, a dry total-fat residue in an amount of 21-25 wt.%, a dry milk-fat residue in an amount of 2-2,5 wt.% and moisture in an amount of 0,5-11 wt.%;
- a chocolate composition comprises dried whole milk and dried skimmed milk as dried milk products;
- at least one ingredient selected from the group comprising polyols, carbohydrates and soluble dietary fibers is used as the water-soluble substance;
- glycerol or sorbitol is used as the polyol, sucrose or dextrose is used as the carbohydrate, and pectin or cellulose is used as the soluble dietary fibers;
- at least one ingredient selected from the group, which comprises oligofructose, polydextrose, pectin, maltodextrin, inulin, agar, alginate, carrageenan, cellulose, guar gum, xanthan gum and locust bean gum, is used as dietary fibers for said chocolate composition;
- at least one ingredient selected from the group, which comprises lecithin, polyglycerol ester, mono- or diglyceride, sucrose ester, sorbitan ester, is used as the emulsifier;
- the chocolate mass has a energy value of not more than 330 kcal/100 g.

The claimed invention is directed to a chocolate mass for producing dark (the first embodiment) or milk (the second embodiment) chocolate with a low energy value, wherein a composition of erythritol and dietary fibers is substituted for sugar, and a water-in-oil emulsion is substituted for cocoa butter.

The term "chocolate with a reduced energy value" is understood herein as a product having an energy value by at least 30% less than that of chocolate with standard energy value (530-580 kcal/100 g) based on sugar and cocoa butter (see Appendix 5 to the Technical Regulations of the Customs Union "Foodstuffs with regard to their Marking" (CU TR 022/2011)").

Preferably, an energy value of this chocolate is not more than 330 kcal/100 g.

Unlike analogous compositions intended for producing chocolate with a reduced energy value, the claimed chocolate mass composition ensures production of chocolate with improved physical and organoleptic characteristics that are close to properties of a chocolate of standard energy value to the maximum. As a result, a consumer can have taste and emotional sensations similar to those arising when consuming chocolate with a standard energy value, but can receive far less quantity of calories.

These properties are ensured due to the ingredient ratios in the claimed composition.

The claimed chocolate mass comprises an aqueous emulsion based on cocoa butter in an amount ranging from 5 to 20 wt.%, which ensures a reduction in an energy value of a product, while preserving main organoleptic characteristics thereof.

A reduction in an emulsion amount to a level below 5 wt.% will lead to an increase in the product energy value and deterioration of its organoleptic properties, which will result in poor melting of chocolate in the mouth.

An increase in an emulsion amount to a level above 20 wt.% will lead to poorer physical properties of a chocolate produced, namely, losses in contraction and typical glance. The emulsion composition comprises a cocoa butter, an emulsifier and a water-soluble substance. Said water-soluble substance, upon introduction to the composition, ensures a lower water activity and high stability of the emulsion.

The described chocolate composition comprising cocoa, erythritol and dietary fibers ensures the most optimal combination of natural taste and a low energy value of the product. It is found that erythritol is the only sweetener suitable for production of chocolate with a low energy value and optimal physical and organoleptic characteristics, since it possesses the following properties:
sweetness level of 0.7 (compared with 1.0 for sucrose),
sweetness intensification when in combination with dietary fibers (inulin, oligofructose, etc.),
energy value equal to zero.

The introduction of dietary fibers in an amount of 5-30 wt.% into the chocolate composition results in a significant reduction in energy value of the product as well as reduces the cooling action of erythritol, i.e., masks off-flavors and aftertaste. A ratio of erythritol and the dietary fibers, each of them having a lower sweetness level as compared to sugar, is such that they intensify each other being taken in combination and in said amounts, thus ensuring reaching a sweetness level that does not differ from that of conventional chocolate. If a dietary fibers content of the claimed composition is lower than 5 wt.%, the cooling effect is not masked, and the product energy value is increased; and if a dietary fiber content is more than 30 wt.%, a sharp deterioration of the organoleptic properties (poorer melting ability) and the physical and chemical properties (higher plastic viscosity) occurs. If an erythritol amount in the claimed composition is increased to a level higher than 50 wt.%, the cooling effect appears (irrespective of the fibers amount), which manifests itself as tickling in a throat at an erythritol content lower than 30 wt.%, and the product energy value is increased (due to an increase of contents of the other ingredients).

Also, the inventors have found that combining cocoa liquor and erythritol by their joint melting in the stated amounts unexpectedly intensifies the chocolate taste.

### BEST MODE OF CARRYING OUT THE INVENTION

The present invention is defined by the claims. The claimed chocolate mass according to the first embodiment (for the production of dark chocolate) can be prepared as follows.

The first step is production of an aqueous phase for an emulsion. For this purpose water is mixed with the water-soluble ingredients in a required quantity.

Then, in the second step, a mixture is prepared from the produced aqueous phase, a cocoa butter and an emulsifier. For this purpose the emulsifier is dissolved in the cocoa butter at a temperature of 60°C for 15 minutes under moderate stirring with the use of any suitable equipment. The aqueous phase is added to the prepared mixture at a temperature ranging from 50 to 60°C under moderate stirring with the use of a magnetic or mechanical mixer. The addition is performed batchwise, as a continuous stream or by drops. The produced mixture is stirred for 1 minute.

The third step comprises preparation of a water-in-oil emulsion with an aqueous phase drop size ranging from 0.1 to 1,000 microns from the triple mixture, as produced in the second step, with the use of any apparatus suitable for this purpose, e.g., a high-shear bottom mixer operating at high rotation speeds. The emulsification process is continued until aqueous phase drops of required size are achieved (approx. 10 minutes). The emulsion thus produced should be stable for a time period required for its further processing.

The fourth step may be conducted in parallel with the first and second ones and consists in preparing a crumb based on the sweetener (erythritol) and cocoa liquor. For this purpose, an erythritol syrup is prepared by heating thereof, the water content being in the range from 20 to 30 wt.%. The syrup is heated to 100-120°C and mixed with the cocoa liquor. The prepared mass is passed through a heat exchanger for thickening, after which dry matter content of the mixture is increased to approx. 99 wt.%. At the same time, taste-and-flavor properties are formed. The concentrated mass produced by thickening is loaded into a crystallizer wherein an amorphous mass is quickly transformed into the crumb comprising erythritol small crystals.

The mass is held in the heat exchanger for 2-10 minutes. The produced crumb based on erythritol and the cocoa liquor is used for producing a chocolate composition at the stage of mixing the ingredients. The use of said crumb in the final chocolate mass enables to lower cooling effect of erythritol further during dissolving.

The chocolate composition is prepared in the fifth step. For this purpose the cocoa liquor, the crumb based on erythritol and the cocoa liquor, and the dietary fibers are loaded into a mixer (e.g., one of the screw type). Then, the produced mixture is refined to a particle size ranging from 18 to 20 microns with the use of a refiner for a required time period (e.g., six hours).

The sixth step consists in mixing the water-in-oil emulsion, as produced in the third step, with the chocolate composition heated to 40-50°C, under stirring. The mixing process is performed, e.g., in a collecting tank equipped with a screw-type mixer. A duration of the mixing process is determined by mass homogeneity and may last from 1 minute to 1 hour (30 minutes on the average).

The last step comprises tempering of the produced mass for forming cocoa butter crystals of the required crystalline modification, subsequent molding and forming of chocolate.

The method of producing a chocolate mass for milk chocolate (the second embodiment) is carried out similarly, except for the fifth step wherein the crumb based on erythritol and the cocoa liquor is mixed with cocoa butter and dried milk products (dried whole milk and dried skimmed milk).

### Exemplary embodiments of the invention

In accordance with the described method, chocolate masses were prepared for producing dark (the first embodiment of the invention - Examples 1-3) and milk (the second embodiment of the invention - Examples 4-6) chocolate, which compositions and properties are shown in Tables 1-12, below.

### Example 1. Dark chocolate

**Table 1. Chocolate mass composition**

| **Ingredient** | **Functional property** | **Content, wt.%** |
|---|---|---|
| **1. Aqueous phase for emulsion** | | |
| Water | - | 70 |
| Glycerol | Water-soluble substance | 15 |
| Sorbitol | Water-soluble substance | 15 |

| **2. Aqueous emulsion based on cocoa butter** | | |
|---|---|---|
| Cocoa butter | Fat phase | 20 |
| Aqueous phase (1) | - | 78 |
| Soy lecithin | Emulsifier | 2 |

| **3. Chocolate composition** | | |
|---|---|---|
| Cocoa liquor | Cocoa product | 45 |
| Erythritol | Sweetener | 50 |
| Oligofructose | Dietary fibers | 5 |

| **4. Chocolate mass** | | |
|---|---|---|
| Chocolate composition (3) | - | 80 |
| Aqueous emulsion based on cocoa butter (2) | - | 20 |

**Table 2. Chocolate properties**

| Parameter | Value |
|---|---|
| Dry residue of cocoa products, % | 40.0 |
| Dry residue of total fat, % | 23.4 |
| Moisture, % | 10.9 |
| Energy value, kcal/100 g | 280 |

### Example 2. Dark chocolate

**Table 3. Chocolate mass composition**

| **Ingredient** | **Functional property** | **Content, wt.%** |
|---|---|---|
| **1. Aqueous phase for emulsion** | | |
| Water | - | 50 |
| Sucrose | Water-soluble substance | 25 |
| Dextrose | Water-soluble substance | 25 |

| **2. Aqueous emulsion based on cocoa butter** | | |
|---|---|---|
| Cocoa butter | Fat phase | 80 |
| Aqueous phase (1) | - | 18 |
| PGPR | Emulsifier | 2 |

| **3. Chocolate composition** | | |
|---|---|---|
| Cocoa liquor | Cocoa product | 40 |
| Erythritol | Sweetener | 30 |
| Inulin | Dietary fibers | 10 |
| Oligo fructose | Dietary fibers | 20 |

| **4. Chocolate mass** | | |
|---|---|---|
| Chocolate composition (3) | - | 93.0 |
| Aqueous emulsion based on cocoa butter (2) | - | 7.0 |

**Table 4. Chocolate properties**

| **Parameter** | **Value** |
|---|---|
| Dry residue of cocoa products, % | 42.8 |
| Dry residue of total fat, % | 25.7 |
| Moisture, % | 1.0 |
| Energy value, kcal/100 g | 330 |

### Example 3. Dark chocolate

**Table 5. Chocolate mass composition**

| **Ingredient** | **Functional property** | **Content, wt.%** |
|---|---|---|
| **1. Aqueous phase for emulsion** | | |
| Water | - | 90 |
| Pectin | Water-soluble substance | 5 |
| Microcrystalline cellulose | Water-soluble substance | 5 |

| **2. Aqueous emulsion based on cocoa butter** | | |
|---|---|---|
| Cocoa butter | Fat phase | 50 |
| Aqueous phase (1) | - | 48 |
| Sorbitan stearate | Emulsifier | 2 |

| **3. Chocolate composition** | | |
|---|---|---|
| Cocoa liquor | Cocoa product | 43 |
| Erythritol | Sweetener | 47 |
| Oligo fructose | Dietary fibers | 8 |
| Pectin | Dietary fibers | 2 |

| **4. Chocolate mass** | | |
|---|---|---|
| Chocolate composition (3) | - | 88 |
| Aqueous emulsion based on cocoa butter (2) | - | 12 |

**Table 6. Chocolate properties**

| **Parameter** | **Value** |
|---|---|
| Dry residue of cocoa products, % | 43.8 |
| Dry residue of total fat, % | 26.4 |
| Moisture, % | 5.2 |
| Energy value, kcal/100 g | 302 |

### Example 4. Milk chocolate

**Table 7. Chocolate mass composition**

| **Ingredient** | **Functional property** | **Content, wt.%** |
|---|---|---|
| **1. Aqueous phase for emulsion** | | |
| Water | - | 70 |
| Glycerol | Water-soluble substance | 15 |
| Sorbitol | Water-soluble substance | 15 |

| **2. Aqueous emulsion based on cocoa butter** | | |
|---|---|---|
| Cocoa butter | Fat phase | 20 |
| Aqueous phase (1) | - | 78 |
| Soy lecithin | Emulsifier | 2 |

| **3. Chocolate composition** | | |
|---|---|---|
| Cocoa liquor | Cocoa product | 10 |
| Cocoa butter | Cocoa product | 14 |
| Dried whole milk | Milk product | 12 |
| Dried skimmed milk | Milk product | 10 |
| Erythritol | Sweetener | 49 |
| Oligo fructose | Dietary fibers | 5 |

| **4. Chocolate mass** | | |
|---|---|---|
| Chocolate composition (3) | - | 80 |
| Aqueous emulsion based on cocoa butter (2) | - | 20 |

**Table 8. Chocolate properties**

| **Parameter** | **Value** |
|---|---|
| Dry residue of cocoa products, % | 23.2 |
| Dry residue of total fat, % | 21.9 |
| Moisture, % | 10.9 |
| Energy value, kcal/100 g | 280 |

### Example 5. Milk chocolate

**Table 9. Chocolate mass composition**

| **Ingredient** | **Functional property** | **Content, wt.%** |
|---|---|---|
| **1. Aqueous phase for emulsion** | | |
| Water | - | 50 |
| Sucrose | Water-soluble substance | 25 |
| Dextrose | Water-soluble substance | 25 |

| **2. Aqueous emulsion based on cocoa butter** | | |
|---|---|---|
| Cocoa butter | Fat phase | 80 |
| Aqueous phase (1) | - | 18 |
| PGPR | Emulsifier | 2 |

| **3. Chocolate composition** | | |
|---|---|---|
| Cocoa liquor | Cocoa product | 10 |
| Cocoa butter | Cocoa product | 12 |
| Dried whole milk | Milk product | 10 |
| Dried skimmed milk | Milk product | 8 |
| Erythritol | Sweetener | 30 |
| Inulin | Dietary fibers | 10 |
| Oligo fructose | Dietary fibers | 20 |

| **4. Chocolate mass** | | |
|---|---|---|
| Chocolate composition (3) | - | 93 |
| Aqueous emulsion based on cocoa butter (2) | - | 7 |

**Table 10. Chocolate properties**

| **Parameter** | **Value** |
|---|---|
| Dry residue of cocoa products, % | 26.1 |
| Dry residue of total fat, % | 24.1 |
| Moisture, % | 0.6 |
| Energy value, kcal/100 g | 330 |

### Example 6. Milk chocolate

**Table 11. Chocolate mass composition**

| **Ingredient** | **Functional property** | **Content, wt.%** |
|---|---|---|
| **1. Aqueous phase for emulsion** | | |
| Water | - | 90 |
| Pectin | Water-soluble substance | 5 |
| Microcrystalline cellulose | Water-soluble substance | 5 |

| **2. Aqueous emulsion based on cocoa butter** | | |
|---|---|---|
| Cocoa butter | Fat phase | 50 |
| Aqueous phase (1) | - | 48 |
| Sorbitan stearate | Emulsifier | 2 |

| **3. Chocolate composition** | | |
|---|---|---|
| Cocoa liquor | Cocoa product | 10 |
| Cocoa butter | Cocoa product | 13 |
| Dried whole milk | Milk product | 11 |
| Dried skimmed milk | Milk product | 9 |
| Erythritol | Sweetener | 47 |
| Inulin | Dietary fibers | 8 |
| Oligo fructose | Dietary fibers | 2 |

| **4. Chocolate mass** | | |
|---|---|---|
| Chocolate composition (3) | - | 88 |
| Aqueous emulsion based on cocoa butter (2) | - | 12 |

**Table 12. Chocolate properties**

| **Parameter** | **Value** |
|---|---|
| Dry residue of cocoa products, % | 26.2 |
| Dry residue of total fat, % | 24.6 |
| Moisture, % | 5.2 |
| Energy value, kcal/100 g | 302 |

### Test results

Comparative studies of the following specimens were conducted:
Specimen 1 - dark chocolate produced from the mass according to the claimed composition.
Specimen 2 - milk chocolate produced from the mass according to the claimed composition.
Specimen 3 - milk chocolate with maltitol produced from the chocolate mass according to US 5425957 corresponding to EP 0 674 840 A1 (analog).
Specimen 4 - dark chocolate with maltitol produced from the chocolate mass according to US 6165540 (analog).
Specimen 5 - dark commercial chocolate of standard energy value comprising sugar, cocoa liquor, cocoa butter, lecithin, emulsifier E476, vanillin.
Specimen 6 - milk commercial chocolate of standard energy value comprising sugar, cocoa butter, dried whole milk, cocoa liquor, dried skimmed milk, lecithin, emulsifier E476, vanillin.

In order to determine organoleptic and consumer properties of the product, the chocolate specimens were tasted.

Active chocolate consumers (who buy chocolate at least once a week) were involved as tasters.

The tasters were invited to taste the chocolate specimens and answer the following questions.
1. Please, evaluate consumer properties under the scale from 1 to 5, where: 5 - like very much, 1 - dislike totally. The evaluation criteria are shown in Table 13.

**Table 13. Evaluation criteria for chocolate properties.**

| Parameter | Taste sensations at score 5 | ... | Taste sensations at score 1 |
|---|---|---|---|
| 1. External appearance | Glance surface | | Mat surface |
| 2. Chocolate taste intensity | Impressive, harmonious | | Tasteless |
| 3. Presence of off-flavors, aftertaste | Absent | | Present |
| 4. Sweetness degree | Natural | | Sickly sweet or insufficiently sweet |
| 5. Structure | Firm, with a "click" typical of chocolate | | Soft, "plasticine", loose |
| 6. Texture | Easily melts in the mouth, smooth | | Melts too quickly or is high-melting, large particles are present |

2. Please, compare a degree of your readiness to consume chocolate of Specimens 1 - 6 under the following scale: "Surely shall consume", "Sooner shall consume", "Do not know", "Sooner shall not consume", "Surely shall not consume".

The results of tasting are shown in Tables 14 and 15.

**Table 14. Average evaluations of chocolate specimen properties.**

| **Evaluation** | **Specimen 1** | **Specimen 2** | **Specimen 3** | **Specimen 4** | **Specimen 5** | **Specime n 6** |
|---|---|---|---|---|---|---|
| | **305 kcal/100 g** | **298 kcal/100 g** | **395 kcal/100 g** | **384 kcal/100 g** | **550 kcal/100 g** | **550 kcal/100 g** |
| External appearance | 4.8 | 4.7 | 3.5 | 2.9 | 4.9 | 4.8 |
| Chocolate taste intensity | 4.7 | 4.5 | 3.7 | 3.5 | 4.8 | 4.6 |
| Presence of off-flavors/ aftertast e | 4.7 | 4.6 | 3.3 | 3.7 | 4.8 | 4.7 |
| Sweetness degree | 4.6 | 4.7 | 3.4 | 3.1 | 4.6 | 4.7 |
| Structure | 4.9 | 4.6 | 3.5 | 3.2 | 4.9 | 4.8 |
| Texture | 4.7 | 4.6 | 2.9 | 3 | 4.8 | 4.7 |

**Table 15. Opinions on readiness to consume chocolate.**

| **Opinion** | **Specimen 1** | **Specimen 2** | **Specimen 3** | **Specimen 4** | **Specimen 5** | **Specimen 6** |
|---|---|---|---|---|---|---|
| | **305 kcal/100 g** | **298 kcal/100 g** | **395 kcal/100 g** | **384 kcal/100 g** | **550 kcal/100 g** | **550 kcal/100 g** |
| Surely shall consume | 43% | 41% | 5% | 3% | 48% | 45% |
| Sooner shall consume | 35% | 32% | 14% | 10% | 29% | 32% |
| Do not know | 12% | 14% | 16% | 24% | 7% | 12% |
| Sooner shall not consume | 7% | 8% | 48% | 37% | 13% | 9% |
| Surely shall not consume | 3% | 5% | 17% | 26% | 3% | 2% |

Also, physical properties of chocolate were measured, such as: viscosity, yield stress, fineness degree, contraction degree and hardness.

Viscosity and yield stress of the chocolate masses were determined with the use of an Anton Paar RheolabQC viscometer and software RheoPlus at 40°C.

Fineness degree was determined with the use of a micrometer.

Contraction degree was determined by measuring the dimensions of the mold and the dimensions of a chocolate brick in a day after cooling.

Hardness was determined with the use of a static mechanical analyzer (TA-HD plus).

**Table 16. Physical properties of chocolate specimens.**

| **Property** | **Specimen 1** | **Specimen 2** | **Specimen 3** | **Specimen 4** |
|---|---|---|---|---|
| | **305 kcal/100 g** | **298 kcal/100 g** | **395 kcal/100 g** | **384 kcal/100 g** |
| Casson plastic viscosity, Pa·s | 4.7 | 6.1 | 14.8 | 5.3 |
| Yield stress, Pa | 8.7 | 10.2 | 15.2 | 14.8 |
| Finess degree, microns | 26 | 29 | 35 | 56 |
| Contraction degree after crystallization, % | 1.1 | 0.7 | 0.3 | 0.4 |
| Hardness, H | 90.5 | 74.3 | 50.8 | 43.6 |

Viscosity determines the chocolate degree of thickness. An optimal viscosity value of chocolate should be in the range from 2 to 4. As can be seen in Table 14, the viscosity of Specimens 1, 2 and 4 is close to an optimal value on the whole. Specimen 3 has too high viscosity.

Solid particle fineness degree in chocolate determines organoleptic properties of a product: if an average fineness degree is higher than 30 microns, granularity of chocolate can be felt. All the specimens comply with this requirement, but Specimens 1 and 2 have a greater comminution degree.

Yield stress is an important process parameter for chocolate, which determines its ability to flow. Specimens 1 and 2 have much better ability to flow than Specimens 3 and 4.

Contraction degree after crystallization should be greater than 0.5%, in order a cast chocolate bar may be extracted from a mold easily. Specimens 1 and 2 have a sufficient contraction degree, unlike Specimens 3 and 4.

Taking into account the above results of tasting and tests, a conclusion may be drawn that the chocolate mass produced according to the claimed invention exhibits significant advantages with regard to taste and physical characteristics as compared to the analogs.

Chocolate produced by methods according to US 5425957 (Specimen 3) and US 6165540 (Specimen 4) do not have a smooth surface and are characterized by too quick melting, i.e. have texture not peculiar to chocolate with a standard energy value (Specimens 5 and 6). Moreover, said chocolate is characterized by the presence of off-flavors.

Chocolate according to the claimed invention (Specimens 1 and 2) has optimal appearance, structure and texture and is characterized by natural taste peculiar to chocolate with a standard energy value (Specimens 5 and 6), and, at the same time, has a reduced total energy value (not more than 330 kcal/100 g). Moreover, this chocolate has physical properties, such as hardness, yield stress and contraction degree, that are closer to those of a chocolate.

Thus, the claimed composition of a chocolate mass ensures production of a low energy value chocolate having improved organoleptic and physical characteristics.

## Claims

1. A chocolate mass for producing a chocolate, with a low energy value, comprising:
a) 5-20 wt.% aqueous emulsion based on cocoa butter, said aqueous emulsion based on cocoa butter comprising:
i) 20-80 wt.% cocoa butter,
ii) 18-78 wt.% aqueous phase, said aqueous phase comprising:
- 50-90 wt.% water,
- 10-50 wt.% water-soluble substance,
iii) 1-3 wt.% emulsifier; and
b) 80-95 wt.% chocolate composition, said chocolate composition comprising the components as per the following two options b₁) and b₂):
option b₁):
i) 40-48 wt.% cocoa liquor,
ii) 30-50 wt.% erythritol,
iii) 5-30 wt.% dietary fibers;
option b₂):
i) 10-15 wt.% cocoa liquor,
ii) 30-50 wt.% erythritol,
iii) 5-30 wt.% dietary fibers,
iv) 12-14 wt.% cocoa butter,
v) 18-24 wt.% dried milk products.

2. The chocolate mass according to Claim 1, wherein the chocolate composition is produced from crumb based on erythritol and cocoa liquor and comprising:
74-83 wt.% erythritol,
16-25 wt.% cocoa liquor, and
not more than 1.5 wt.% water.

3. The chocolate mass according to Claim 1 comprising said components a) in combination with said components b) as per option b₁), comprising a dry cocoa-product residue in an amount of 40-44 wt.%, a dry total-fat residue in an amount of 22-27 wt.%, and moisture in an amount of 1-11 wt.%.

4. The chocolate mass according to Claim 1, wherein at least one ingredient selected from the group comprising polyols, carbohydrates and soluble dietary fibers is used as the water-soluble substance.

5. The chocolate mass according to Claim 4, wherein glycerol or sorbitol is used as the polyol, sucrose or dextrose is used as the carbohydrates, and pectin or cellulose is used as the soluble dietary fibers.

6. The chocolate mass according to Claim 1, wherein at least one ingredient selected from the group comprising oligofructose, polydextrose, pectin, maltodextrin, inulin, agar, alginate carrageenan, cellulose, guar gum, xanthan gum and locust bean gum is used as said dietary fibers.

7. The chocolate mass according to Claim 1, wherein at least one ingredient selected from the group comprising lecithin, polyglycerol ester, mono- or diglyceride, sucrose ester, sorbitan ester is used as said emulsifier.

8. The chocolate mass according to any one of Claims 1-7, having an energy value of not more than 330 kcal/100 g.

9. A chocolate mass according to Claim 1 comprising said components a) in combination with said components b) as per option b₂), comprising a dry cocoa-product residue in an amount of 22-27 wt.%, a dry total-fat residue in an amount of 21-25 wt.%, a dry milk-fat residue in an amount of 2-2.5 wt.%, and moisture in an amount of 0.5-11 wt.%.

10. The chocolate mass according to Claim 1 comprising said components a) in combination with said components b) as per option b₂), wherein the chocolate composition comprises dried whole milk and dried skimmed milk as said dried milk products.

## Patentansprüche

1. Schokoladenmasse zur Herstellung einer Schokolade, mit einem niedrigen Energiewert, umfassend:
a) 5-20 Gew.-% einer wässrigen Emulsion auf der Basis von Kakaobutter, wobei die wässrige Emulsion auf der Basis von Kakaobutter umfasst:
i) 20-80 Gew.-% Kakaobutter,
ii) 18-78 Gew.-% wässrige Phase, wobei die wässrige Phase umfasst:
- 50-90 Gew.-% Wasser,
- 10-50 Gew.-% wasserlösliche Substanz,
iii) 1-3 Gew.-% Emulgator; und
b) 80-95 Gew.-% Schokoladenzusammensetzung, wobei die Schokoladenzusammensetzung die Komponenten gemäß den folgenden zwei Optionen b₁) und b₂) umfasst:
Option b₁) :
i) 40-48 Gew.-% Kakaoflüssigkeit,
ii) 30-50 Gew.-% Erythrit,
iii) 5-30 Gew.-% Ballaststoffe;
Option b₂) :
i) 10-15 Gew.-% Kakaoflüssigkeit,
ii) 30-50 Gew.-% Erythrit,
iii) 5-30 Gew.-% Ballaststoffe,
iv) 12-14 Gew.-% Kakaobutter,
v) 18-24 Gew.-% Milchpulvererzeugnisse.

2. Schokoladenmasse nach Anspruch 1, wobei die Schokoladenzusammensetzung aus Krume auf der Basis von Erythrit und Kakaomasse hergestellt wird und umfasst:
74-83 Gew.-% Erythrit,
16-25 Gew.-% Kakaoflüssigkeit und
nicht mehr als 1,5 Gew.-% Wasser.

3. Schokoladenmasse nach Anspruch 1, umfassend die Komponenten a) in Kombination mit den Komponenten b) gemäß Option b₁), umfassend einen trockenen Kakaoproduktrest in einer Menge von 40-44 Gew.-%, einen trockenen Gesamtfettrest in einer Menge von 22-27 Gew.-% und Feuchtigkeit in einer Menge von 1-11 Gew.-%.

4. Schokoladenmasse nach Anspruch 1, wobei als wasserlösliche Substanz mindestens ein Bestandteil, ausgewählt aus der Gruppe, die Polyole, Kohlenhydrate und lösliche Ballaststoffe umfasst, verwendet wird.

5. Schokoladenmasse nach Anspruch 4, wobei Glycerin oder Sorbit als Polyol, Saccharose oder Dextrose als Kohlenhydrate und Pektin oder Cellulose als lösliche Ballaststoffe verwendet werden.

6. Schokoladenmasse nach Anspruch 1, wobei mindestens ein Bestandteil, ausgewählt aus der Gruppe, umfassend Oligofructose, Polydextrose, Pektin, Maltodextrin, Inulin, Agar, Alginat-Carrageenan, Cellulose, Guargummi, Xanthan und Johannisbrotkernmehl, als besagte Ballaststoffe verwendet wird.

7. Schokoladenmasse nach Anspruch 1, wobei als Emulgator mindestens ein Bestandteil ausgewählt aus der Gruppe umfassend Lecithin, Polyglycerinester, Mono- oder Diglycerid, Saccharoseester, Sorbitanester verwendet wird.

8. Schokoladenmasse nach einem der Ansprüche 1-7 mit einem Energiewert von nicht mehr als 330 kcal/100 g.

9. Schokoladenmasse nach Anspruch 1, umfassend die Komponenten a) in Kombination mit den Komponenten b) gemäß Option b₂), umfassend einen trockenen Kakaoproduktrest in einer Menge von 22-27 Gew.-%, einen trockenen Gesamtfettrest in einer Menge von 21-25 Gew.-%, einen trockenen Milchfettrest in einer Menge von 2-2,5 Gew.-% und Feuchtigkeit in einer Menge von 0,5-11 Gew.-%.

10. Schokoladenmasse nach Anspruch 1, umfassend die Komponenten a) in Kombination mit den Komponenten b) gemäß der Option b₂), wobei die Schokoladenzusammensetzung getrocknete Vollmilch und getrocknete Magermilch als besagte getrocknete Milchprodukte umfasst.

## Revendications

1. Masse de chocolat pour la production d'un chocolat, dotée d'une valeur énergétique basse, comprenant :
a) 5 à 20 % en poids d'une émulsion aqueuse basée sur du beurre de cacao, ladite émulsion aqueuse basée sur du beurre de cacao comprenant :
i) 20 à 80 % en poids de beurre de cacao,
ii) 18 à 78 % en poids d'une phase aqueuse, ladite phase aqueuse comprenant :
- 50 à 90 % en poids d'eau,
- 10 à 50 % en poids d'une substance soluble dans l'eau,
iii) 1 à 3 % d'un émulsifiant ; et
b) 80 à 95 % en poids d'une composition de chocolat, ladite composition de chocolat comprenant les composants selon les 2 options suivantes b₁) et b₂) :
option b₁) :
i) 40 à 48 % en poids de liqueur de cacao,
ii) 30 à 50 % en poids d'érythritol,
iii) 5 à 30 % en poids de fibres alimentaires ;
option b₂) :
i) 10 à 15 % en poids de liqueur de cacao,
ii) 30 à 50 % en poids d'érythritol,
iii) 5 à 30 % en poids de fibres alimentaires,
iv) 12 à 14 % en poids de beurre de cacao,
v) 18 à 24 % en poids de produits laitiers séchés.

2. Masse de chocolat selon la revendication 1, la composition de chocolat étant produite à partir de miettes basées sur de l'érythritol et de la liqueur de cacao et comprenant :
74 à 83 % en poids d'érythritol,
16 à 25 % en poids de liqueur de cacao, et
pas plus de 1,5 % en poids d'eau.

3. Masse de chocolat selon la revendication 1 comprenant lesdits composants a) en combinaison avec lesdits composants b) selon l'option b₁), comprenant un résidu sec de produit de cacao en une quantité de 40 à 44 % en poids, un résidu sec de graisses totales en une quantité de 22 à 27 % en poids, et de l'humidité en une quantité de 1 à 11 % en poids.

4. Masse de chocolat selon la revendication 1, au moins un ingrédient choisi dans le groupe comprenant des polyols, des glucides et des fibres alimentaires solubles étant utilisé en tant que la substance soluble dans l'eau.

5. Masse de chocolat selon la revendication 4, du glycérol ou du sorbitol étant utilisé en tant que polyol, du saccharose ou du dextrose étant utilisé en tant que glucide, et de la pectine ou de la cellulose étant utilisée en tant que fibres alimentaires solubles.

6. Masse de chocolat selon la revendication 1, au moins un ingrédient choisi dans le groupe comprenant l'oligofructose, le polydextrose, la pectine, la maltodextrine, l'inuline, l'agar, l'alginate, le carraghénane, la cellulose, la gomme de guar, la gomme de xanthane et la gomme de caroube étant utilisé en tant que lesdites fibres alimentaires.

7. Masse de chocolat selon la revendication 1, au moins un ingrédient choisi dans le groupe comprenant la lécithine, un ester de polyglycérol, un monoglycéride ou un diglycéride, un ester de saccharose, un ester de sorbitane étant utilisé en tant que ledit émulsifiant.

8. Masse de chocolat selon l'une quelconque des revendications 1 à 7, possédant une valeur énergétique de pas plus de 330 kcal/100 g.

9. Masse de chocolat selon la revendication 1 comprenant lesdits composants a) en combinaison avec lesdits composants b) selon l'option b₂), comprenant un résidu sec de produit de cacao en une quantité de 22 à 27 % en poids, un résidu sec de graisses totales en une quantité de 21 à 25 % en poids, un résidu sec de graisses de lait en une quantité de 2 à 2,5 % poids, et de l'humidité en une quantité de 0,5 à 11 % en poids.

10. Masse de chocolat selon la revendication 1 comprenant lesdits composants a) en combinaison avec lesdits composants b) selon l'option b₂) , la composition de chocolat comprenant du lait entier séché et du lait écrémé séché en tant que lesdits produits laitiers séchés.
